# EUROPÄISCHE PATENTSCHRIFT

(11) **EP 3 966 665 B1**
(45) Veröffentlichungstag und Bekanntmachung des Hinweises auf die Patenterteilung: **08.07.2026**
(21) Anmeldenummer: 20726056.3
(22) Anmeldetag: 12.05.2020
(51) Int. Cl.: G06F 3/01, B60K 35/10, B60K 35/20, B60K 35/22, B60K 35/26, B60K 35/65, B60K 35/80, G06F 3/16

(54) **VERFAHREN ZUM BETREIBEN EINES BEDIENSYSTEMS UND BEDIENSYSTEM**
METHOD FOR OPERATING AN OPERATOR CONTROL SYSTEM, AND OPERATOR CONTROL SYSTEM
PROCÉDÉ POUR FAIRE FONCTIONNER UN SYSTÈME DE COMMANDE UTILISATEUR ET SYSTÈME DE COMMANDE UTILISATEUR

(30) Priorität: 08.07.2019 DE 102019210008
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: KASSNER, Astrid, 10117 Berlin (DE)
(86) Internationale Anmeldenummer: PCT/EP2020/063242
(87) Internationale Veröffentlichungsnummer: WO 2021/004681

(56) Entgegenhaltungen:
- WO-A1-2015/131954
- JP-A- H0 844 520
- US-A1- 2003 126 330
- US-A1- 2010 281 432
- US-A1- 2018 365 025

## Beschreibung

Die vorliegende Erfindung betrifft ein Verfahren zum Betreiben eines Bediensystems und ein Bediensystem, insbesondere in einem Fahrzeug.

Der moderne Alltag ist durch eine Vielzahl von Einrichtungen geprägt, deren Bedienung in verschiedenen Kontexten auf unterschiedliche Weisen erfolgen kann. Hierzu wurden verschiedene Bedienkonzepte vorgeschlagen, beispielsweise eine Steuerung mittels Tastaturen, Gesten, Sprache oder Zeigergeräten, die je nach Einsatzgebiet spezifische Vor- und Nachteile aufweisen. In manchen Fällen können zudem zum Erzielen der gleichen Systemreaktion verschiedene Bedienmodalitäten vorgesehen sein, die ein Nutzer kennen und zwischen denen er sich entscheiden muss.

Bei bekannten Systemen ist oft vorgesehen, dass ein Nutzer die zur Verfügung stehenden Typen von Bedienhandlungen anhand eines Handbuchs oder eines Einführungsvideos lernt, beispielsweise indem bei der ersten Inbetriebnahme des Systems ein Video abgespielt wird und/oder später wieder aufrufbar ist. Der Nutzer wird dabei oft mit einer größeren Informationsmenge konfrontiert, als er verarbeiten kann, und er muss erhebliche Zeit aufwenden, um die Bedienung zu erlernen.

In der US 2015/0175172 A1 wird ein System für gestenbasierte Eingaben mit einer haptischen Rückmeldung beschrieben. Es wird eine Geste erfasst und eine entsprechende Rückmeldung ausgegeben. Zudem kann auch eine Sprachsteuerung erfolgen. Es werden verschiedene Gesten beschrieben, die mittels einer Kamera erfasst werden können und die verschiedenen steuerbaren Aktionen des Systems zugeordnet sind.

Aus der US 2004/0189720 A1 ist eine Architektur zum Steuern eines Computers mittels Gesten bekannt, bei der Gesten in Kombination mit Sprachbefehlen verwendet werden können.

Die DE 10 2009 039 114 A1 schlägt eine Bedienvorrichtung für ein Fahrzeug vor, bei der ein Körperteil eines Nutzers in einem von drei Raumbereichen detektiert und bei einem grafischen Objekt ein zugeordnetes Objekts angezeigt wird. Beispielsweise können eine Zahl und eine Skala angezeigt werden.

Die US 2018/0307347 A1 beschreibt ein Verfahren zum Detektieren von Gesten, wobei ein kapazitiver Sensor verwendet wird. Der Nutzer kann in einer Datenbank für bestimmte Kommandos Gesten definieren sowie vorgegebene Gesten durch Betrachten einer Anleitung erlernen.

Aus der DE 10 2006 037 156 A1 ist ein Verfahren zum Betreiben einer interaktiven Bedienvorrichtung bekannt, bei dem ein Bedienelement angezeigt und eine Annäherung eines Nutzers an das Bedienelement detektiert wird. Das Bedienelement wird dann optimiert dargestellt, etwa indem es vergrößert wird. Die Anpassung der Darstellung kann zudem mittels einer Geste gesteuert werden.

Aus der US 2018/365025 A1 ist ein Verfahren zur Anpassung von Benutzeroberflächen bekannt. Dabei wird das Benutzererfahrungsniveau auf der Grundlage der Nutzung einer Softwareanwendung und anderer erfasster Faktoren bestimmt. Auf der Grundlage des Benutzererfahrungsniveaus wird eine Benutzeroberfläche angepasst, um dem Benutzer der adaptiven Benutzeroberfläche eine verbesserte Erfahrung zu bieten.

Der vorliegenden Erfindung liegt die Aufgabe zugrunde, ein Verfahren und ein Bediensystem bereitzustellen, bei denen ein Nutzer dabei unterstützt wird, verschiedene Bedienmöglichkeiten zu erkennen und anzuwenden.

Erfindungsgemäß wird diese Aufgabe durch ein Verfahren mit den Merkmalen des Anspruchs 1, ein Bediensystem mit den Merkmalen des Anspruchs 8 sowie ein Fahrzeug mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird unter anderem eine bedienbare Funktion des Bediensystems erfasst und in Abhängigkeit von der bedienbaren Funktion wird zumindest ein potentieller Bedienhandlungstyp für die bedienbare Funktion bestimmt. Es wird eine Bedienhistorie für den potentiellen Bedienhandlungstyp der bedienbaren Funktion erfasst und anhand der Bedienhistorie wird eine Ausgabe erzeugt und ausgegeben. Dabei umfasst die Ausgabe einen Hinweis auf die Ausführung des potentiellen Bedienhandlungstyps.

Bei dem Verfahren kann vorteilhafterweise ein Nutzer besonders flexibel, gezielt und effizient bei einer Bedienung mittels bestimmter Typen von Bedienhandlungen unterstützt werden. Dazu wird die Bedienhistorie ausgewertet, anhand derer insbesondere bestimmt werden kann, bei welchen Bedienhandlungstypen für einen Nutzer Verbesserungs- oder Lernbedarf besteht.

Bei dem Verfahren wird zunächst eine bedienbare Funktion erfasst. Dabei wird insbesondere erfasst, welche Funktion oder welche Funktionen aktuell bedienbar sind. Es kann sich dabei beispielsweise um einen Zustand einer Einrichtung handeln, in dem eine Benutzereingabe oder eine andere Interaktion eines Nutzers mit der Einrichtung erfassbar ist. Zur Bedienung ist zumindest eine Bedienhandlung vorgesehen, mittels welcher der Nutzer mit der Einrichtung interagieren kann. Bei einer Interaktion des Nutzers mit der Einrichtung wird beispielsweise eine Bedienhandlung des Nutzers durch das Bediensystem erfasst und es wird ein Steuersignal erzeugt und an die Einrichtung übertragen, um eine Funktion zu aktivieren oder zu deaktivieren, einen einstellbaren Parameter einzugeben oder eine Anweisung an die Einrichtung zu übertragen.

Bei einer Bedienung kann einer Bedienhandlung, mittels welcher aktuell eine Bedienung einer Funktion vorgenommen werden kann, ein bestimmter Bedienhandlungstyp zugeordnet werden. Das heißt insbesondere, die konkrete, durch den Nutzer tatsächlich durchgeführte Bedienhandlung wird einem abstrakten Modell einer Bedienhandlung zugeordnet.

Bei einer Ausbildung des erfindungsgemäßen Verfahrens umfasst der potentielle Bedienhandlungstyp eine Geste im dreidimensionalen Raum, eine Geste auf einer berührungsempfindlichen Oberfläche, eine Spracheingabe oder eine Bedienung eines Druck-, Schiebe- oder Drehschalters. Ein Bedienhandlungstyp kann ferner beispielsweise einen Tastendruck, eine Rotation oder eine andere Betätigung eines Bedienelements umfassen. Dadurch kann ein Nutzer vorteilhafterweise besonders gut bei der Ausführung geeigneter Bedienhandlungen unterstützt werden.

Beispielsweise wird eine lautliche Äußerung mittels eines Mikrofons erfasst und die erfasste Äußerung wird einem bestimmten Sprachbefehl zugeordnet; dabei wird berücksichtigt, dass die tatsächlich erfasste Äußerung typischerweise nicht genau dem vorgegebenen, idealisierten Modell des Bedienhandlungstyps der bestimmten Spracheingabe entspricht, sondern dass es zu Abweichungen kommt, etwa durch Rauschen bei der Erfassung, Hintergrundlaute und eine inkonsistente Lauterzeugung beim Aussprechen des Sprachbefehls. In ähnlicher Weise kann etwa eine Geste in einem dreidimensionalen Raum erfasst und etwa einer Wischgeste in eine bestimmte Richtung zugeordnet werden, wobei ein Modell des entsprechenden Bedienhandlungstyps für eine tatsächlich erfasste Geste bestimmt wird.

Ferner sind insbesondere Bedienmodalitäten definiert, die eine Menge bestimmter Bedienhandlungstypen zusammenfassen, insbesondere durch gemeinsame Charakteristika der Erzeugung, Durchführung und/oder Erfassung der Bedienhandlungstypen einer Bedienmodalität. So kann eine Bedienmodalität "Spracheingabe" verschiedene Bedienhandlungstypen umfassen, insbesondere verschiedene einzelne Sprachbefehle. In einem weiteren Beispiel kann eine Bedienmodalität "Gestenbedienung" für den dreidimensionalen Raum verschiedene Gesten umfassen, etwa Wischgesten rechts und links, Wischgesten nach oben und unten, eine Bestätigungsgeste und/oder eine Zeige-und-Verschiebegeste, die etwa als Lautstärkegeste definiert sein kann. Weitere Bedienmodalitäten können zum Beispiel Gesten auf einer berührungsempfindlichen Oberfläche oder Betätigungen physischer Bedieneinrichtungen sein.

Zur Durchführung einer Geste kann beispielsweise ein Betätigungsobjekt verwendet werden, insbesondere eine Hand des Nutzers. In den folgenden Erläuterungen sind Angaben, die sich auf die Hand eines Nutzers als Betätigungsobjekt beziehen, auf andere Betätigungsobjekte, etwa einen Stift, zu verallgemeinern.

Unter einer "Geste" wird insbesondere eine bestimmte Position und Ausrichtung, das heißt eine Pose eines Betätigungsobjekts, etwa einer Hand eines Nutzers, oder eine bestimmte Bewegung, die mit dem Betätigungsobjekt ausgeführt wird, verstanden. Gesten können nach an sich bekannter Art ausgestaltet sein. Sie umfassen insbesondere Zeigegesten, Wischgesten und solche Gesten, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Die Gesten werden in einem Erfassungsraum ausgeführt. Dieser kann in einem räumlichen Bezug zu einer bestimmten Einrichtung stehen, etwa eine Ausgabevorrichtung, und kann beispielsweise an diesen angrenzen. Eine Geste kann ferner eine Annäherung an eine bestimmte räumliche Position, etwa eine Einrichtung oder eine Position auf einer Anzeigefläche, umfassen. Durch eine Gestenbedienung wird dem Nutzer eine besonders einfache und intuitive Bedienmöglichkeit bereitgestellt.

Anhand einer Geste kann ferner eine Richtung im Raum ermittelt werden und in Abhängigkeit von der ermittelten Richtung kann insbesondere eine Position bestimmt werden, für die eine Zeigegeste bestimmt wird. Zum Beispiel kann bestimmt werden, auf welchen Punkt in einem Anzeigebereich ein Nutzer zeigt, und diese Information kann unterschiedlich für die Bedienung genutzt werden. Es kann eine Auswahl erfolgen oder das Zeigen auf einen bestimmten Bereich kann bereits als Eingabe ausgewertet werden. Eine Auswahl eines grafischen Objekts in einem Anzeigebereich kann visualisiert werden, was den Vorteil hat, dass der Nutzer unmittelbar eine Rückkopplung zu seiner Bedienaktion erhält. Dabei kann der Punkt im Anzeigebereich auch dann visualisiert werden, wenn noch kein Objekt in dem Umgebungsbereich um den Punkt identifiziert wurde. Dies vermeidet, dass der Nutzer zwischen den Objekten im Leeren suchen muss, bis er einen bestimmten Bereich oder das gewünschte grafische Objekt getroffen hat. Dies kann das Auswahlverfahren weiter beschleunigen.

Die Erfassung einer Geste kann etwa berührungslos durch ein Kamerasystem erfolgen, welches zeitlich aufgelöste Videodaten aus dem Detektionsraum aufnimmt und mittels einer angeschlossenen Analyseeinheit die erfassten Nutzerbewegungen bestimmten Gesten zuordnet. Alternativ oder auch zusätzlich kann eine Geste mittels resistiver und/oder kapazitiver Flächen erfasst werden.

Bei dem Verfahren wird in Abhängigkeit von der bedienbaren Funktion zumindest ein potentieller Bedienhandlungstyp für die bedienbare Funktion bestimmt, insbesondere können mehrere potentielle Bedienhandlungstypen bestimmt werden. Das heißt, nachdem zunächst ermittelt wurde, welche Funktionen aktuell bedienbar sind, wird zudem bestimmt, welche Arten von Bedienung möglich sind und auf welche Weisen, das heißt mittels welcher Bedienmodalitäten und/oder mittels welcher Bedienhandlungstypen, diese Bedienung vorgenommen werden kann. Zum Beispiel können in einer aktuellen Bediensituation und einem Zustand der bedienbaren Funktion bestimmte Gesten, Sprachbefehle oder andere Typen von Bedienhandlungen verwendbar sein, während andere Arten der Eingabe aktuell nicht zur Bedienung verwendet werden können. Beispielsweise kann in einem bestimmten Zustand der bedienbaren Funktion ein vertikales Scrollen durchgeführt werden, aber keine seitliche Verschiebung oder umgekehrt. Dementsprechend sind bestimmte Befehle oder Bedienhandlungstypen in dieser Situation verwendbar oder nicht.

Die bei dem Verfahren erzeugte Ausgabe umfasst einen Hinweis auf die Ausführung des potentiellen Bedienhandlungstyps. Der Hinweis kann beispielsweise so gebildet sein, dass ein Hinweis auf einen besonders gut geeigneten oder bevorzugten Bedienhandlungstyp, insbesondere eine besonders gut geeignete Bediengeste, ausgegeben wird. Ferner kann ein Hinweis darauf ausgegeben werden, wie eine Bedienhandlung eines Bedienhandlungstyps auszuführen ist oder wie eine vom Nutzer durchgeführte Bedienhandlung besser durchgeführt werden soll, etwa um die Bedienhandlung mit einer besseren Genauigkeit und Zuverlässigkeit zu erkennen oder um die Bedienung mittels eines Bedienhandlungstyps mit geringerem physischem Aufwand ausführen zu können.

Bei einer Ausbildung wird die Ausgabe optisch, akustisch und/oder taktil wahrnehmbar ausgegeben. Das Ausgeben kann auf an sich bekannte Weise erfolgen, etwa mittels einer Anzeigefläche oder eines Lautsprechers. Ferner kann eine dreidimensional erscheinende Darstellung ausgegeben werden, etwa mittels einer holografischen oder autostereoskopischen Darstellung.

Erfindungsgemäß umfasst die Ausgabe eine schematische grafische Darstellung einer Hand, wobei der Hinweis auf die Ausführung des potentiellen Bedienhandlungstyps mittels der Darstellung der Hand ausgegeben wird. Dadurch kann vorteilhafterweise besonders klar auf die Ausführung einer Geste hingewiesen werden.

Die Ausgabe, insbesondere mit einem Hinweis auf die Ausführung einer Geste im dreidimensionalen Raum, kann beispielsweise eine grafische Darstellung eines Betätigungsobjekts umfassen, etwa einer menschlichen Hand. Die Darstellung ist insbesondere schematisch ausgebildet, wobei beispielsweise lediglich Umrisse des Betätigungsobjekts angezeigt werden. Die grafische Darstellung kann auf einer Anzeigefläche einer Anzeigeeinheit ausgegeben werden, beispielsweise überlagernd zusätzlich zu einer weiteren Anzeige. Insbesondere kann auf der Anzeigefläche eine Anzeige mit einer Bedienoberfläche erzeugt werden, die von der grafischen Darstellung der Bedienhandlung mittels des Betätigungsobjekts überlagert wird. Zudem kann zusätzlich zu einer dreidimensionalen Geste als Bedienhandlungstyp auch eine Berührung oder Geste auf einer berührungsempfindlichen Oberfläche und/oder ein Sprachbefehl als potentieller Bedienhandlungstyp vorgesehen sein. Insbesondere wird eine schematische Handdarstellung so erzeugt, dass sie die Größe einer tatsächlichen Hand aufweist und eine Projektion der Anordnung einer Hand relativ zur Ausgabefläche bei einer Raumgeste anzeigt.

Bei einer weiteren Ausbildung werden zumindest zwei potentielle Bedienhandlungstypen für die bedienbare Funktion bestimmt und einer der potentiellen Bedienhandlungstypen wird als bevorzugter Bedienhandlungstyp bestimmt. Insbesondere kann alternativ oder zusätzlich eine bevorzugte Bedienmodalität bestimmt werden. Dadurch kann einem Nutzer vorteilhafterweise signalisiert werden, welcher Typ von Bedienhandlung aktuell besonders gut zur Bedienung geeignet ist.

Beispielsweise kann eine bedienbare Funktion mittels verschiedener Bedienhandlungstypen oder Bedienmodalitäten bedient werden, etwa mittels Spracheingabe, dreidimensionaler Geste und Bedienung mittels Gesten auf einem Touchscreen. Je nach der aktuellen Situation und/oder einem aktuellen Zustand der bedienbaren Funktion kann jedoch bestimmt werden, dass ein bestimmter Bedienhandlungstyp oder eine Bedienmodalität bevorzugt ist, etwa eine Spracheingabe oder eine Gestenbedienung, beispielsweise weil der Nutzer seine Hände anderweitig nutzt, weil ein Bedienelement oder ein Erfassungsraum besser oder schlechter für das Ausführen einer Geste erreichbar ist, weil Hintergrundgeräusche die Erfassung einer Spracheingabe stören oder aufgrund persönlicher Präferenzen des Nutzers.

Bei einer weiteren Ausbildung wird eine Nutzerposition relativ zu einer Eingabevorrichtung erfasst und der bevorzugte Bedienhandlungstyp umfasst in Abhängigkeit von der Nutzerposition eine Betätigung der Eingabevorrichtung oder eine Raumgeste. Dadurch können bevorzugte Bedienhandlungstypen und/oder Bedienmodalitäten vorteilhafterweise besonders leicht bestimmt werden.

Beispielsweise kann eine Sitzposition des Nutzers in einem Innenraum, etwa eines Fahrzeugs, erfasst werden. Befindet sich der Sitz in einer Stellung weit hinten in dem Innenraum, das heißt in großer räumlicher Entfernung von einer Eingabevorrichtung wie einem Touchscreen, so kann der bevorzugte Bedienhandlungstyp eine Raumgeste umfassen, während eine Bedienung mittels Betätigen beziehungsweise Berühren des Touchscreens oder eines anderen Bedienelements nicht bevorzugt ist. Dabei kann auch eine Reichweite des Nutzers erfasst werden, etwa eine Armlänge, oder es kann von einem vorgegebenen Wert der Reichweite ausgegangen werden, wobei eine Betätigung oder Berührung eines Touchscreens oder Bedienelements nur dann der bevorzugte Bedienhandlungstyp ist, wenn sich dieses innerhalb der Reihweite des Nutzers befindet.

Es kann ferner eine Ausrichtung des Nutzers in dem Innenraum, insbesondere relativ zu einer bestimmten ausgezeichneten Richtung, etwa einer Fahrtrichtung oder einer Richtung nach vorne oder hinten in Längsrichtung eines Fahrzeugs, erfasst und beim Bestimmen des bevorzugten Bedienhandlungstyps berücksichtigt werden. Beispielsweise kann eine Blickrichtung oder eine Ausrichtung eines Sitzes bestimmt werden. In Abhängigkeit von der Ausrichtung des Nutzers kann dann ein bevorzugter Bedienhandlungstyp bestimmt werden. Zum Beispiel kann auf diese Weise bestimmt werden, ob ein Bedienelement in einer für den Nutzer ergonomisch erreichbaren Richtung angeordnet ist, etwa in einem Bereich vor dem Nutzer statt hinter ihm.

Auch die Ausgabe kann in Abhängigkeit von einer Ausrichtung des Nutzer in dem Innenraum erfolgen, insbesondere eine visuell wahrnehmbare Ausgabe mittels einer Ausgabevorrichtung im Sichtfeld des Nutzers.

Bei dem Verfahren ist zudem eine Bedienhistorie für den potentiellen Bedienhandlungstyp vorgesehen, anhand derer eine Ausgabe erzeugt wird.

Bei einer Weiterbildung des Verfahrens umfasst die Bedienhistorie für den potentiellen Bedienhandlungstyp Informationen über eine Benutzungshäufigkeit und/oder eine Ausführungsqualität des potentiellen Bedienhandlungstyps. Dadurch kann vorteilhafterweise die konkrete Benutzung eines bestimmten Bedienhandlungstyps besonders gut bewertet werden.

Die Bedienhistorie umfasst etwa gespeicherte Daten über die Nutzung von Bedienhandlungen eines bestimmten Bedienhandlungstyps, gegebenenfalls im Zusammenhang mit einer bedienbaren Funktion, insbesondere betreffend die Häufigkeit der Nutzung, wenn der Bedienhandlungstyp bevorzugt ist, und/oder eine bei der Nutzung bestimmte Erkennungssicherheit bei der Ausführung. Die Bedienhistorie umfasst beispielsweise eine Information darüber, wie oft eine Eingabe mittels einer Bedienhandlung eines bestimmten Bedienhandlungstyp für eine bedienbare Funktion durchgeführt wurde. Sie umfasst ferner zum Beispiel, wie häufig ein Bedienhandlungstyp verwendet wird, wenn dieser Bedienhandlungstyp als bevorzugter Bedienhandlungstyp bestimmt wurde.

Bei einer weiteren Ausbildung wird eine Nutzeridentifikation eines Nutzers erfasst und die Bedienhistorie wird für den potentiellen Bedienhandlungstyp für den identifizierten Nutzer erfasst. Dadurch kann vorteilhafterweise die Benutzung eines Bedienhandlungstyps für einen spezifischen Nutzer verbessert werden.

Die Nutzeridentifikation wird auf an sich bekannte Weise erfasst. Beispielsweise kann ein persönlicher Gegenstand, etwa ein mobiles Nutzergerät, ein Fahrzeugschlüssel, eine Identifikationskarte oder andere -vorrichtung, eine Nutzereingabe oder ein optisches Nutzeridentifikationsverfahren genutzt werden.

Die Bedienhistorie wird insbesondere für einen identifizierten Nutzer erzeugt, sodass vorteilhafterweise die Fähigkeiten und/oder Gewohnheiten des Nutzers beurteilt werden können. So kann anhand der Bedienhistorie beispielsweise bestimmt werden, ob und/oder wie oft ein Nutzer Bedienhandlungen eines bestimmten Typs ausführt, wenn diese für eine Eingabe oder zum Aufrufen einer Funktion zur Verfügung steht, und wie oft er statt des Bedienhandlungstyps eine Bedienhandlung eines anderen Typs verwendet, insbesondere eines nicht bevorzugten Bedienhandlungstyps. Die Bedienhistorie kann beispielsweise auf einem mobilen Nutzergerät gespeichert oder anhand der Nutzeridentifikation abgerufen werden, etwa durch Zugriff auf eine externe Speichereinheit wie einen Server oder eine interne Speichereinheit, etwa eines Fahrzeugs.

Ferner kann bestimmt werden, auf welche Weise ein Nutzer eine Bedienhandlung ausführt; beispielsweise kann die Sicherheit bestimmt werden, mit der eine Bedienhandlung eines Typs erkannt wird, und/oder es kann eine Ausführungsqualität für eine Bedienhandlung bestimmt werden. Beispielsweise kann bei einer Geste bestimmt werden, mit welcher Sicherheit oder Konfidenz die Geste einem bestimmten Bedienhandlungstyp zugeordnet werden kann, insbesondere um die Bedienhandlung von anderen Bedienhandlungstypen abzugrenzen. Ferner kann ein Ausführungsparameter bestimmt werden, etwa eine Deutlichkeit, eine Geschwindigkeit oder ein Ausführungsraum.

Wenn der Bedienhandlungstyp eine im Raum durchgeführte Geste umfasst, kann beispielsweise bestimmt werden, in welchem Erfassungsbereich im Raum die Geste durchgeführt wurde, wie deutlich beispielsweise eine Bewegung oder Pose eines Betätigungsobjekts ausgeprägt ist, mit welcher Amplitude oder Geschwindigkeit eine Bewegung durchgeführt wird oder für welchen Zeitraum eine bestimmte Pose gehalten wird. Ferner können verschiedene Spracheingaben als Bedienhandlungstypen zur Verfügung stehen. Die Bedienhistorie kann dann umfassen, wie deutlich eine Spracheingabe erkannt wurde und/oder mit welcher Eingabequalität die Spracheingabe erfasst wurde, etwa in Abhängigkeit von einer Lautstärke, einer Sprechrichtung, einer Sprechgeschwindigkeit, einer Betonung oder Sprachartikulation. Der Hinweis auf die Ausführung des potentiellen Bedienhandlungstyps kann dann so erzeugt werden, dass der Nutzer der Ausgabe entnimmt, wie der potentielle Bedienhandlungstyp besser ausgeführt werden kann.

Bei einer Ausbildung wird ferner eine Bedienhandlung erfasst und dem Bedienhandlungstyp zugeordnet. Anhand der erfassten Bedienhandlung wird die Bedienhistorie für den Bedienhandlungstyp aktualisiert. Die Bedienhistorie kann ferner auch dann aktualisiert werden, wenn erfasst wird, dass ein Nutzer keine Bedienhandlungen eines potentiellen Bedienhandlungstyps durchführt, insbesondere wenn es sich dabei um einen bevorzugten Bedienhandlungstyp handelt. Dadurch wird die Bedienhistorie vorteilhafterweise stets aktuell gehalten und die Ausgabe kann an die Bedürfnisse des Nutzers angepasst werden.

Die Bedienhistorie kann in diesem Fall beispielsweise um zusätzliche Informationen ergänzt werden oder vorhandene Informationen können durch aktualisierte Informationen aktualisiert werden. Beispielsweise kann die Häufigkeit, mit welcher der Bedienhandlungstyp von dem Nutzer genutzt wird, aktualisiert werden. Ferner können Informationen darüber ergänzt oder aktualisiert werden, welche die Ausführungsqualität der Bedienhandlungen betreffen; beispielsweise kann sich die Qualität und/oder Deutlichkeit, mit der ein Nutzer Bedienhandlungen eines bestimmten Typs durchführt, verbessern und dies kann erfasst und in der Bedienhistorie gespeichert werden.

Bei einer Ausbildung umfasst die Bedienhistorie einen vorgegebenen Zeitraum oder eine vorgegebene Anzahl von Bedienhandlungen eines Nutzers oder für eine bestimmte bedienbare Funktion. Die Bedienhistorie kann ferner einen variablen Zeitraum umfassen, wobei für das Verfahren zunächst bestimmt wird, welcher Umfang der Bedienhistorie berücksichtigt werden soll. Zum Beispiel kann die Bedienhistorie für einen kürzeren Zeitraum berücksichtigt werden, wenn ein Nutzer die Bedienung neu lernt, da hier mit größeren Veränderungen im Bedienverhalten zu rechnen ist. Dagegen kann nach einer längeren Dauer, in der sich der Nutzer mit dem Bediensystem vertraut gemacht hat, ein längerer Zeitraum der Bedienhistorie berücksichtigt werden, um die Ausgabe anhand einer größeren Datenbasis zu erzeugen und dem Nutzer gezieltere Unterstützung zu bieten.

Ferner kann erfasst werden, dass der Nutzer eine Bedienhandlung durchführt, die keinem potentiellen Bedienhandlungstyp zugeordnet werden kann, etwa weil der Nutzer einen aktuell nicht zur Verfügung stehenden Typ von Bedienhandlung verwendet, oder weil die Bedienhandlung keinem bekannten Bedienhandlungstyp zugeordnet werden kann. Beispielsweise führt der Nutzer eine Wischgeste durch, obwohl aktuell keine entsprechende Eingabe möglich ist, oder er führt eine Geste undeutlich aus, etwa zu kleinräumig, schnell oder ungenau. Es kann dann erkannt werden, dass der Nutzer eine Eingabe vornehmen will, dass er aber anscheinend nicht weiß, welche Bedienhandlungstypen zur Verfügung stehen und/oder wie potentielle Bedienhandlungen korrekt auszuführen sind.

Bei einer Weiterbildung wird ferner eine Bedienhandlung erfasst, die keinem potentiellen Bedienhandlungstyp zuordenbar ist, und anhand der bedienbaren Funktion und der erfassten Bedienhandlung wird eine Intentionshypothese bestimmt. Die Ausgabe mit dem Hinweis wird anhand der Intentionshypothese erzeugt. Dadurch kann einem Nutzer vorteilhafterweise eine besser geeignete Bedienmöglichkeit vorgeschlagen werden. Es wird insbesondere erkannt, welchen Bedienhandlungstyp der Nutzer wahrscheinlich verwenden wollte.

Beim Bestimmen der Intentionshypothese können etwa Wahrscheinlichkeiten für verschiedene potentielle Bedienhandlungstypen bestimmt und verglichen werden und der Bedienhandlungstyp mit der höchsten Wahrscheinlichkeit kann als Intentionshypothese verwendet werden. Die Wahrscheinlichkeiten können etwa anhand einer Ähnlichkeit zu der tatsächlich erfassten Bedienhandlung bestimmt werden; in diesem Fall kann beispielsweise ein Bedienhandlungstyp erkannt werden, selbst wenn die Bedienhandlung nicht ausreichend deutlich durchgeführt wurde. Ferner kann die Bedienhistorie verwendet werden, um eine Bedienhandlung zu bestimmen, die der Nutzer für die bedienbare Funktion besonders häufig verwendet. In einer Kombination kann zudem mittels einer Gewichtung sowohl bestimmt werden, welche Bedienhandlungstypen gemäß der Bedienhistorie für die bedienbare Funktion besonders häufig verwendet werden und welchem dieser Bedienhandlungstypen die tatsächlich erfasste Bedienhandlung besonders ähnlich ist. Ferner kann berücksichtigt werden, welche potentiellen Bedienhandlungstypen zur Verfügung stehen und es kann der wahrscheinlichste dieser Bedienhandlungstypen als Intentionshypothese gewählt werden. Insbesondere kann der Nutzer aufgefordert werden, zu bestätigen, dass es sich bei der Intentionshypothese um den tatsächlich intendierten Bedienhandlungstyp handelt.

Bei einer Ausbildung wird anschließend an die Ausgabe mit dem Hinweis eine Bedienhandlung des potentiellen Bedienhandlungstyps erfasst und anhand der erfassten Bedienhandlung wird ein Lernvorgang zum Erkennen des potentiellen Bedienhandlungstyps ausgeführt. Insbesondere wird dabei in Abhängigkeit von der erfassten Bedienhandlung ein Steuersignal zum Bedienen der Funktion des Bediensystems erzeugt. Dadurch kann vorteilhafterweise bei Bedarf die Erkennung von Bedienhandlungen des Bedienhandlungstyps verbessert werden.

Beispielsweise wird anhand der Bedienhistorie bestimmt, dass Bedienhandlungen eines bestimmten Bedienhandlungstyps mit geringer Zuverlässigkeit oder Sicherheit erfasst werden, insbesondere für einen bestimmten Nutzer. Dies kann etwa durch eine nutzerspezifische Art der Ausführung einer Geste oder einer Aussprache eines Sprachbefehls bedingt sein. Es kann nun ein Lernvorgang durchgeführt werden, etwa mittels an sich bekannter Verfahren des Maschinenlernens, um die Erkennung der Bedienhandlungen zu verbessern. In diesem Fall wird also nicht nur der Nutzer dazu angehalten, einen potentiellen Bedienhandlungstyp zu verwenden oder entsprechende Bedienhandlungen verbessert auszuführen, sondern die Erkennung der tatsächlich erfassten Bedienhandlung kann verbessert werden.

Bei einer Ausbildung wird eine Auswahl-Bedienhandlung erfasst und anhand der erfassten Auswahl-Bedienhandlung wird eine bedienbare Einrichtung bestimmt. Die bedienbare Funktion wird anhand der bestimmten bedienbaren Einrichtung bestimmt. Insbesondere ist die Auswahl-Bedienhandlung als Zeigegeste ausgebildet. Dadurch kann die bedienbare Funktion vorteilhafterweise besonders einfach und gezielt ausgewählt werden.

Beispielsweise kann ein Nutzer mit einem Betätigungsobjekt, insbesondere mit einem Finger, auf eine Einrichtung im Fahrzeug zeigen, insbesondere mittels einer bestimmten Zeigepose, und diese wird dann zur Bedienung ausgewählt. Es werden solche Funktionen der Einrichtung als bedienbare Funktionen identifiziert, die in der aktuellen Situation durch eine Bedienhandlung bedient werden können. Beispielsweise kann durch Zeigen auf eine Schiebetür diese ausgewählt werden und als potentieller Bedienhandlungstyp kann eine Schiebe- oder Wischgeste bestimmt werden, durch die ein Türöffnen oder -schließen als bedienbare Funktion angesteuert werden kann. Analog dazu können beispielsweise Fenster, Klappen, Beleuchtungseinrichtungen und/oder Sitzverstellungen gesteuert werden.

Das erfindungsgemäße Bediensystem umfasst eine Steuereinheit sowie eine Ausgabeeinheit, die mit der Steuereinheit gekoppelt ist. Dabei ist die Steuereinheit dazu eingerichtet, eine bedienbare Funktion des Bediensystems zu erfassen, in Abhängigkeit von der bedienbaren Funktion zumindest einen potentiellen Bedienhandlungstyp für die bedienbare Funktion zu bestimmen und eine Bedienhistorie für den potentiellen Bedienhandlungstyp der bedienbaren Funktion zu erfassen. Dabei ist die Steuereinheit ferner dazu eingerichtet, die Ausgabeeinheit so anzusteuern, dass eine Ausgabe ausgegeben wird, die einen Hinweis auf die Ausführung des potentiellen Bedienhandlungstyps umfasst.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren zu seinem Betrieb.

Die Ausgabeeinheit kann auf verschiedene Weise ausgebildet sein. Sie kann beispielsweise eine Anzeigefläche umfassen, auf der bei der Ausgabe eine grafische Darstellung ausgebbar ist. Sie kann ferner eine Vorrichtung zur Ausgabe von akustisch erfassbaren Ausgaben umfassen, insbesondere von Sprachausgaben. Die Ausgabeeinheit kann ferner dazu geeignet sein, eine Ausgabe mit einer dreidimensionalen Darstellung zu erzeugen, etwa als holografische oder autostereoskopische Ausgabe.

Eine Ausbildung des erfindungsgemäßen Bediensystems umfasst eine Identifikationsvorrichtung, die dazu eingerichtet ist, eine Nutzeridentifikation eines Nutzers zu erfassen. Dabei ist die Steuereinheit ferner dazu eingerichtet, die Bedienhistorie für den potentiellen Bedienhandlungstyp für den identifizierten Nutzer zu erfassen. Dadurch kann die Ausgabe vorteilhafterweise besonders gezielt an die Bedürfnisse des jeweiligen Nutzers angepasst werden.

Bei einer weiteren Ausbildung umfasst das Bediensystem eine Erfassungseinheit zum Erfassen einer Bedienhandlung, insbesondere mit einer Kamera zum Erfassen einer Geste in einem Erfassungsbereich, einer berührungsempfindlichen Oberfläche und/oder einer Spracherfassungseinheit. Insbesondere umfasst das Bediensystem Erfassungseinheiten für mehrere Bedienmodalitäten. Dadurch können vorteilhafterweise unterschiedliche Bedienmodalitäten genutzt werden, um Bedienhandlungen zu erfassen.

Bei einer Weiterbildung ist die Steuereinheit dazu eingerichtet, anhand der erfassten Bedienhandlung einen Lernvorgang zum Erkennen des potentiellen Bedienhandlungstyps auszuführen. Dadurch kann vorteilhafterweise die Erkennung von Bedienhandlungen eines bestimmten Bedienhandlungstyps verbessert werden. Der Lernvorgang wird insbesondere mittels an sich bekannter Verfahren des Maschinenlernens durchgeführt.

Das erfindungsgemäße Fahrzeug umfasst ein Bediensystem gemäß der vorliegenden Beschreibung.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems,
- Figur 2: zeigt ein Ausführungsbeispiel des erfindungsgemäßen Verfahrens und
- Figur 3: zeigt ein Ausführungsbeispiel einer bei dem erfindungsgemäßen Verfahren erzeugten Ausgabe.

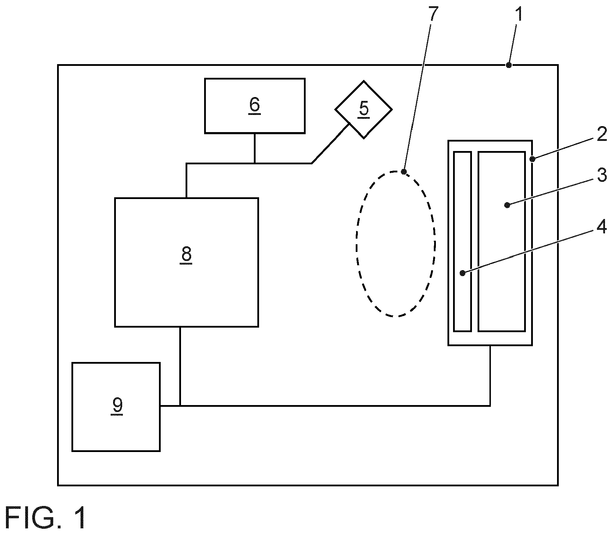

Mit Bezug zu Figur 1 wird ein Fahrzeug mit einem Ausführungsbeispiel des erfindungsgemäßen Bediensystems erläutert.

Das Fahrzeug 1 umfasst einen Touchscreen 2, der auf an sich bekannte Weise ausgebildet ist und eine Anzeigeeinheit 3 sowie eine darüber angeordnete berührungsempfindliche Oberfläche 4 umfasst. Das Fahrzeug 1 umfasst ferner eine Erfassungseinheit 5, die als Kamera 5 ausgebildet ist und durch die in einem Erfassungsbereich 7 im Innenraum des Fahrzeugs 1 Gesten erfassbar sind, und eine als Lautsprecher 6 ausgebildete Ausgabeeinheit 6. Der Touchscreen 2, die Kamera 5 und der Lautsprechern 6 sind mit einer Steuereinheit 8 gekoppelt, mit der auch eine Multimediaeinheit 9 gekoppelt ist.

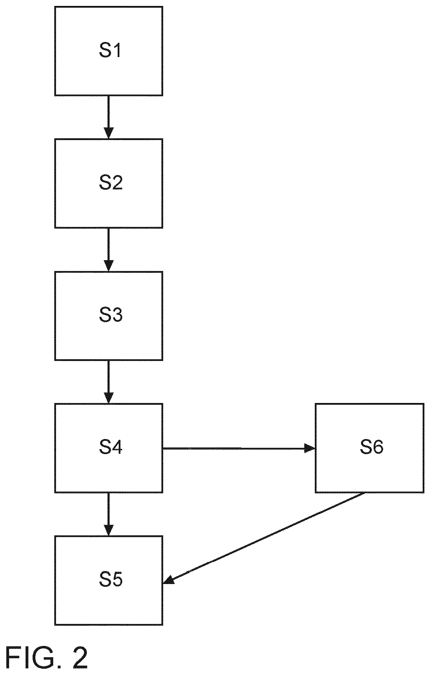

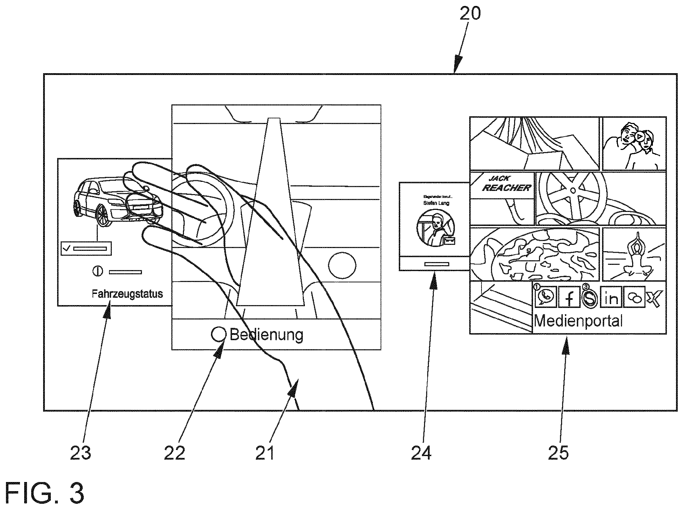

Mit Bezug zu den Figuren 2 und 3 wird ein Ausführungsbeispiel des erfindungsgemäßen Verfahrens und eine dabei erzeugte Ausgabe erläutert. Dabei wird von dem oben mit Bezug zu Figur 1 erläuterten Ausführungsbeispiel des erfindungsgemäßen Bediensystems ausgegangen, welches durch die Beschreibung des Verfahrens weiter spezifiziert wird.

In einem Schritt S1 wird erfasst, welche Funktionen aktuell bedienbar sind. Hierzu wird bestimmt, welche Einrichtungen aktuell durch die Steuereinheit 8 angesteuert werden können und sich in einem Zustand befinden, in dem Eingaben eines Nutzers verarbeitet werden können. Bei dem Ausführungsbeispiel sind Funktionen der Multimediaeinheit 9 bedienbar, beispielsweise Funktionen zur Ausgabe von audiovisuellen Inhalten, Texten und Bildern, zur Steuerung eines Navigationsgeräts, zum Zugriff auf weitere Einrichtungen des Fahrzeugs 1 oder zum Steuern einer Telekommunikationseinrichtung, etwa eines Telefons. Dabei kann ein Nutzer auch durch hierarchisch geordnete Datenbestände, etwa Musiktitel oder Adressdaten, oder Menüstrukturen navigieren. Bei weiteren Ausführungsbeispielen können alternativ oder zusätzlich andere Funktionen und/oder Einrichtungen des Fahrzeugs 1 bedienbar sein.

In diesem Schritt S1 wird beim Ausführungsbeispiel ferner die Identität des Nutzers erfasst. Dies erfolgt bei dem Ausführungsbeispiel anhand eines mobilen Geräts, das dem Nutzer zugeordnet ist, insbesondere einem Fahrzeugschlüssel. Bei weiteren Ausführungsbeispielen kann die Identifikation anhand eines Mobiltelefons erfolgen, dessen Position im Bereich eines bestimmten Fahrzeugsitzes, etwa des Fahrersitzes, im Fahrzeug 1 bestimmt wird und das einem bestimmten Nutzer zugeordnet ist. Die Identifikation kann ferner anhand einer Eingabe des Nutzers erfolgen, der sich beispielsweise durch eine Eingabe mittels des Touchscreens 2 über einen Login anmeldet.

In Abhängigkeit von den bedienbaren Funktionen werden in einem weiteren Schritt S2 potentielle Bedienhandlungstypen bestimmt, das heißt, es wird ermittelt, welche Arten von Bedienhandlungen ein Nutzer durchführen kann, um bestimmte Eingaben zur Bedienung der bedienbaren Funktionen vorzunehmen. Bei dem Ausführungsbeispiel werden zunächst verschiedene Bedienmodalitäten bestimmt, etwa dreidimensionale Gesten im Erfassungsbereich 7, Gesten auf der berührungsempfindlichen Oberfläche 4, Sprachbefehle und/oder Betätigungen physischer Bedienelemente wie Tast-, Druck- und Drehschalter, Schiebe und Drehregler oder Knöpfe.

In einem weiteren Schritt S3 werden bevorzugte Bedienhandlungstypen bestimmt, wobei bei dem Ausführungsbeispiel die Bedienhandlungstypen einer bestimmten bevorzugten Bedienhandlungstypen einer bevorzugten Bedienmodalität als bevorzugt bestimmt werden. Das heißt, es wird bestimmt, welche Bedienhandlungstypen in der aktuellen Situation oder für bestimmte bedienbare Funktionen besonders gut geeignet sind.

Erfindungsgemäß wird hierzu die Position eines Fahrzeugsitzes bestimmt, auf dem sich ein Nutzer befindet. Hierzu kann zunächst bestimmt werden, auf welchem Fahrzeugsitz sich der Nutzer tatsächlich befindet, etwa mittels einer Sitzmatte oder einer Detektionseinrichtung, ferner kann ein bestimmter Fahrzeugsitz dem Bediensystem oder einer bestimmten bedienbaren Einrichtung 9 des Fahrzeugs 1 zugeordnet sein. Bei dem Ausführungsbeispiel wird davon ausgegangen, dass der Fahrer des Fahrzeugs 1 als Nutzer angesehen wird und sich auf dem Fahrersitz befindet. Bestimmten Positionen des Fahrzeugsitzes können verschiedene Bedienmodalitäten als bevorzugt zugeordnet sein. Befindet sich beispielsweise der Fahrersitz, etwa bei einer automatischen Fahrt, in einer nach hinten verfahrenen Position, von der aus Bedienelemente am Armaturenbrett des Fahrzeugs 1 weit entfernt sind, so können Bedienmodalitäten als bevorzugt bestimmt werden, die keine Betätigung von am Armaturenbrett angeordneten Bedienelementen erfordern; zum Beispiel kann in diesem Fall eine Steuerung mittels Sprachbefehlen oder dreidimensionalen Gesten bevorzugt sein.

Zusätzlich kann bei einem weiteren Ausführungsbeispiel bestimmt werden, welche Bedienhandlungstypen für bestimmte Eingaben einen minimalen physischen Aufwand erfordern oder eine möglichst schnelle Bedienung erlauben. Zum Beispiel kann ein Scrollen durch eine Liste mehrere Betätigungen eines physischen oder virtuell dargestellten Tasters erfordern, während eine analoge Bedienung mittels einer Wischgeste entlang der berührungsempfindlichen Oberfläche 4 oder im Erfassungsbereich 7 wesentlich schneller und mit geringerem Aufwand durchgeführt werden kann. Bei einem weiteren Beispiel kann ein Springen zu einem bestimmten Eintrag einer Liste mittels eines Sprachbefehls besonders schnell erfolgen, während die Eingabe des Eintrags mittels einer Tastatur mehrere Betätigungen erfordert.

Bei weiteren Ausführungsbeispielen können zusätzlich andere Parameter genutzt werden, um bevorzugte Bedienhandlungstypen oder Bedienmodalitäten zu bestimmen, etwa ein manueller oder zumindest teilweise automatischer Fahrmodus, ein befahrener Straßentyp, eine geographische Umgebung oder Einstellungen, Eingaben und Präferenzen für den identifizierten Nutzer oder Fahrer des Fahrzeugs 1.

In einem weiteren Schritt S4 wird eine Bedienhistorie für den identifizierten Nutzer erfasst. Die Bedienhistorie umfasst bei dem Ausführungsbeispiel Informationen darüber, mittels Bedienhandlungen welcher Bedienhandlungstypen der Nutzer in der Vergangenheit Eingaben für bestimmte bedienbare Funktionen vorgenommen hat. Sie umfasst ferner Informationen darüber, auf welche Weise der Nutzer die Bedienhandlungen ausgeführt hat, beispielsweise wie gut die Eingaben anhand der Bedienhandlungen bestimmter Bedienhandlungstypen erkannt wurden und inwiefern eine veränderte Durchführung der Bedienhandlungen die Erkennbarkeit verbessern würde. Das heißt, die Bedienhistorie umfasst Informationen darüber, ob der Nutzer in der Vergangenheit Bedienhandlungen bestimmter Bedienhandlungstypen verwendet hat, um bestimmte Eingaben vorzunehmen, und wie er diese Bedienhandlungen ausgeführt hat.

Zum Beispiel hat der Nutzer in der Vergangenheit Bedienhandlungen eines bestimmten Bedienhandlungstyps ungenau ausgeführt, etwa indem er eine Wischgeste im dreidimensionalen Raum mit zu hoher Geschwindigkeit, über eine zu geringe Strecke und/oder nicht ausreichend geradlinig durchgeführt hat. Dies führte in der Vergangenheit dazu, dass die Erkennung der Wischgeste mit einer geringen Konfidenz erfolgte, wobei beispielsweise die Amplitude der Wischgeste oder ihre Richtung mit nur geringer Genauigkeit bestimmt werden konnte. Bei einem weiteren Beispiel hat der Nutzer in der Vergangenheit einen Sprachbefehl undeutlich, zu leise oder zu schnell ausgesprochen. Bei einem weiteren Beispiel hat der Nutzer beim Betätigen eines virtuellen Bedienelements auf dem Touchscreen 2 einen Bereich am Rand des Bedienelements berührt, sodass die Eingabe nicht klar von der Betätigung eines benachbarten Bedienelements abgegrenzt werden konnte.

Bei dem Ausführungsbeispiel wird die Bedienhistorie so erfasst, dass diese eine vorgegebene Anzahl von Eingaben des Benutzers umfasst. Bei weiteren Ausführungsbeispielen kann eine bestimmte Zeitdauer vorgegeben sein oder die Anzahl der berücksichtigten Bedienhandlungen in der Vergangenheit kann während der Ausführung des Verfahrens variabel bestimmt werden.

Wenn anhand der erfassten Bedienhistorie bestimmt wird, dass der Nutzer zur Bedienung normalerweise einen bevorzugten Bedienhandlungstyps verwendet und die entsprechende Bedienhandlung gut erkennbar ausführt, so wird in einem weiteren Schritt S5 eine Bedienhandlung erfasst, ein entsprechendes Steuersignal erzeugt und die Einrichtung eines Fahrzeugs 1 angesteuert.

Wird dagegen bestimmt, dass der Nutzer den bevorzugten Bedienhandlungstyps selten oder niemals verwendet hat oder dass der Nutzer Bedienhandlung des bevorzugten Bedienhandlungstyps nicht optimal ausführt, so wird in einem Schritt S6 eine Ausgabe mit einem Hinweis auf die Ausführung des potentiellen Bedienhandlungstyps erzeugt und ausgegeben.

Dem Nutzer soll verdeutlicht werden, dass er etwa potentielle Gesten gar nicht oder falsch ausführt oder dass er die Bedienung mit weniger physischem Aufwand ausführen könnte. Die Ausgabe wird nun individuell in der jeweiligen Situation so erzeugt, dass auf einen vom Nutzer nicht ausgeführten, falsch ausgeführten oder nicht optimal ausgeführten Bedienhandlungstyp, etwa eine bestimmte Geste, hingewiesen wird.

Bei dem Beispiel wird dem Nutzer bei Nichtnutzung bestimmter Gesten an bestimmten Stellen der Bedienung einer Mensch-Maschine-Schnittstelle an diesen Stellen beispielsweise eine schematische Hand angezeigt, welche die Ausführung des noch ungenutzten Gestentyps darstellt. Bei falscher oder nicht optimaler Ausführung der Geste eines bestimmten Gestentyps wird die intendierte Geste erkannt und es wird ebenfalls eine schematische Hand angezeigt, welche die korrekte oder sparsamere Gestenausführung in Bewegung anzeigt.

Bei weiteren Beispielen erfolgt wird die korrekte Gestenausführung auf andere Art dargestellt. So kann zum Beispiel mit Hilfe holografischer oder autostereoskopischer Anzeigen eine dreidimensionale Hand im Raum vor einem Display oder in einem anderen Erfassungsbereich die korrekte Gestenbewegung angezeigt werden. Eine mögliche Erweiterung des Verfahrens besteht darin, neben der visuellen Anzeige die visuellen Ratschläge um eine Sprachausgabe zu ergänzen. So kann auf in einer bestimmten Bediensituation nie ausgeführten Gesten, die der Nutzer aber an anderer Stelle korrekt ausführt und kennt, per Sprachausgabe ein Hinweis ausgegeben werden; etwa "Du kannst hier auch eine Swipe-Geste ausführen". Bei falscher oder nicht optimaler Gestenausführung kann ein sprachlicher Hinweise zur Ausführung und Verbesserung ausgegeben werden; etwa "Du musst die Geste am Ende ganz kurz halten" oder "Du brauchst den Arm nicht so weit zu bewegen". Dadurch kann gezielter auf das Problem der Ausführung eines Bedienhandlungstyps eingegangen und eine natürliche Interaktion wie mit einem natürlichen Gegenüber imitiert werden.

Ferner kann beim Erfassen der Identität des Nutzers, anhand eines Schlüssels oder anhand von biometrischen Eigenschaften, individuell auf die Gestenbedienung und -nutzung der verschiedenen Nutzer eingegangen werden. Das System erkennt etwa bereits beim Einstieg in das Fahrzeug anhand der Bedienhistorie, dass der Nutzer in bestimmten Bediensituationen eine bestimmte Geste nicht ausführt. Es kann auf diese Weise ferner erkannt werden, dass der Nutzer bereits in der Vergangenheit Probleme hatte, eine bestimmte Geste korrekt oder mit geringem physischem Aufwand auszuführen. Es kann dann für den Nutzer eine individuelle Unterstützung zur optimalen Gestenbedienung erreicht werden.

Figur 3 zeigt ein Beispiel einer Ausgabe mit einem Hinweis auf die Ausführung des potentiellen Bedienhandlungstyps. Bei dem dort beispielhaft dargestellten Fall ist der bevorzugte Bedienhandlungstypen eine Wischgeste im dreidimensionalen Raum, durch die verschiedene grafische Objekte 22 bis 25 innerhalb einer Bedienoberfläche 20 verschoben werden können, insbesondere um ein Element in den Vordergrund zu bringen, auszuwählen und anschließend weiter zu bedienen. Der Hinweis auf eine solche Wischgeste ist dabei als schematisch in Umrissen gezeigte Darstellung einer Hand 21 ausgebildet. Die Ausgabe ist dabei dynamisch gebildet, das heißt, die schematisch dargestellte Hand 21 wird in der Weise bewegt dargestellt, wie die Wischgeste im dreidimensionalen Raum ausgeführt werden soll. Bei der Bedienoberfläche 20 des Ausführungsbeispiels ist allerdings auch eine Bedienung auf andere Weise mittels nicht bevorzugter Bedienhandlungen möglich, etwa durch Betätigen von Pfeiltasten, durch eine Wischgeste entlang der berührungsempfindlichen Oberfläche 4, durch einen Sprachbefehl oder durch Betätigen eines physischen Bedienelements, etwa eines Dreh-Drück-Stellers.

Bei dem Ausführungsbeispiel wird die Ausgabe ferner in Abhängigkeit davon gebildet, wie der Nutzer seine Ausführung von Bedienhandlungen des bevorzugten Bedienhandlungstyps verbessern kann, das heißt, es werden diejenigen Aspekte der Ausführung besonders deutlich dargestellt, bei denen Verbesserungsbedarf besteht. Beispielsweise kann die Handhaltung während der Geste besonders deutlich dargestellt werden, ebenso die Geschwindigkeit oder die Amplitude der Bewegung, etwa über eine besonders lange Strecke.

Bei einem weiteren nicht erfindungsgemäßen Beispiel erfolgt die Darstellung des Hinweises auf die Ausführung des potentiellen Bedienhandlungstyps durch Ausgabe eines schriftlichen Hinweises. Bei weiteren Ausführungsbeispielen kann die Ausgabe mittels einer holographischen oder autostereoskopischen Anzeige erfolgen, insbesondere um dreidimensionale Gesten darzustellen. Bei weiteren Ausführungsbeispielen kann die Ausgabe alternativ oder zusätzlich akustisch wahrnehmbar sein, etwa durch einen gesprochenen Hinweis auf die Ausführung des bevorzugten Bedienhandlungstyps. Insbesondere kann die Ausgabe mittels einer Ausgabemodalität erfolgen, die auf eine bevorzugte Bedienmodalität hinweist, etwa durch die Ausgabe eines akustisch wahrnehmbaren Hinweises auf die Bedienung mittels Sprachbefehlen oder durch Hervorheben eines betätigbaren physischen oder virtuell dargestellten Bedienelements, etwa durch eine Helligkeit, Farbe oder einen dynamischen Effekt wie Blinken.

Nach der Ausgabe kann bei einem weiteren Ausführungsbeispiel im Schritt S5 eine Bedienhandlung des Nutzers als Eingabe erfasst und ein entsprechendes Steuersignal erzeugt werden, um die Einrichtung 9 des Fahrzeugs 1 zu bedienen. Die Bedienung kann auch mittels einer Bedienhandlung eines nicht bevorzugten Bedienhandlungstyps erfolgen.

Anhand der erfassten Bedienhandlung wird die Bedienhistorie aktualisiert.

Bei einem weiteren Ausführungsbeispiel des erfindungsgemäßen Verfahrens wird eine Bedienhandlung eines Nutzers erfasst, etwa eine Geste in dem Erfassungsbereich 7 oder ein Sprachbefehl, wobei der Bedienhandlung jedoch keine aktuell zur Verfügung stehende Bedienung einer Einrichtung 9 des Fahrzeugs 1 zugeordnet wird. Dies kann dadurch bedingt sein, dass die Bedienhandlung nicht richtig erkannt und einem falschen Bedienhandlungstyps zugeordnet wurde oder dass der Nutzer eine Bedienhandlung eines nicht zur Verfügung stehenden Bedienhandlungstyps durchgeführt hat, etwa weil ihm nicht bewusst ist, welcher Bedienhandlungstypen aktuell zur Verfügung stehen oder wie diese auszuführen sind. Es wird eine Intentionshypothese bestimmt, das heißt, das System bildet eine Hypothese darüber, welcher Bedienhandlungstypen wahrscheinlich vom Nutzer intendiert war. Die Ausgabe wird dann mit einem Hinweis auf den gemäß der Intentionshypothese intendierten Bedienhandlungstypen erzeugt.

Beispielsweise kann als Intentionshypothese derjenige Bedienhandlungstyps bestimmt werden, welcher eine höchste Ähnlichkeit zu der erfassten Bedienhandlung aufweist. Dabei wird ferner berücksichtigt, welche potentiellen Bedienhandlungstypen tatsächlich aktuell zur Verfügung stehen. Ferner können anhand der Bedienhistorie solche Bedienhandlungstypen berücksichtigt werden, die der Nutzer bevorzugt verwendet, oder es kann bestimmt werden, ob die erfasste Bedienhandlung besondere Ähnlichkeiten zu einer in der Vergangenheit erfassten Bedienhandlung aufweist, bei welcher der Nutzer einen bestimmten Bedienhandlungstyps nicht optimal ausgeführt hat.

Zum Beispiel kann als Bedienhandlung ein Sprachbefehl erfasst werden, der eine klangliche oder semantische Ähnlichkeit zu einem potentiellen Bedienhandlungstyp aufweist, der dann als Intentionshypothese bestimmt wird. Bei einem weiteren Beispiel kann eine dreidimensionale Geste als Bedienhandlung erfasst werden, die eine derzeit nicht vorgesehene Richtung aufweist, etwa eine vertikale Richtung statt einer horizontalen Richtung, wobei dann ein Bedienhandlungstyp mit einer horizontalen Richtung als Intentionshypothese bestimmt wird.

Bei einem weiteren Ausführungsbeispiel wird ferner anhand der Bedienhistorie und/oder anhand einer erfassten Bedienhandlung ein Lernvorgang durchgeführt, wobei die Erkennung des Bedienhandlungstyps durch das System verbessert wird. Hierzu können an sich bekannte Verfahren etwa des Maschinenlernens angewandt werden. Auf diese Weise wird bei dem Verfahren sowohl ein Lernbedarf für den Nutzer erkannt, dem die optimale Anwendung eines bevorzugten Bedienhandlungstyps ermöglicht wird, als auch ein Lernbedarf des Systems, für welches die Erkennung eines bestimmten Bedienhandlungstyps für den Nutzer verbessert wird.

Bei einem weiteren Ausführungsbeispiel wird in dem Erfassungsbereich 7 eine Zeigegeste des Nutzers erfasst und anhand der erfassten Zeigegeste eine Richtung bestimmt. Es wird bestimmt, auf welche Einrichtung 9 des Fahrzeugs 1 der Nutzer zeigt und diese Einrichtung 9 wird ausgewählt. Eine anschließend erfasste Bedienhandlung wird als Bedienung der ausgewählten Einrichtung 9 behandelt, das heißt, anhand der Bedienhandlung wird ein Steuersignal für die ausgewählte Einrichtung 9 erzeugt. Zum Beispiel zeigt der Nutzer auf eine Schiebetür des Fahrzeugs 1 und führt mittels einer Schiebe- oder Wischgeste in eine Richtung ein automatisches Öffnen oder Schließen der Schiebetür durch. Bei einem weiteren Beispiel zeigt der Nutzer auf ein Display des Fahrzeugs 1, auf dem Bilddaten oder Bedienoberflächen ausgebbar sind, wobei eine anschließende Bedienhandlung als Bedienung der Ausgabe oder der Bedienoberfläche behandelt wird. Auf diese Weise kann die Zahl der zur Verfügung stehenden Bedienhandlungstypen auf relevante Bedienmöglichkeiten für eine bestimmte Einrichtung 9 eingeschränkt werden.

### Bezugszeichenliste

- 1: Fahrzeug
- 2: Touchscreen
- 3: Ausgabeeinheit; Anzeigeeinheit
- 4: Erfassungseinheit; berührungsempfindliche Oberfläche
- 5: Erfassungseinheit; Kamera
- 6: Ausgabeeinheit; Lautsprecher
- 7: Erfassungsbereich
- 8: Steuereinheit
- 9: Einrichtung; Multimediaeinheit
- 20: Bedienoberfläche
- 21: Schematische Darstellung einer Hand
- 22 bis 25: Grafisches Objekt
- S1 bis S6: Schritt

## Patentansprüche

1. Verfahren zum Betreiben eines Bediensystems, bei dem
eine bedienbare Funktion des Bediensystems erfasst wird;
in Abhängigkeit von der bedienbaren Funktion zumindest ein potentieller Bedienhandlungstyp für die bedienbare Funktion bestimmt wird, wobei einer der potentiellen Bedienhandlungstypen als bevorzugter Bedienhandlungstyp bestimmt wird;
eine Bedienhistorie für den bevorzugten Bedienhandlungstyp der bedienbaren Funktion erfasst wird, wobei die Bedienhistorie für den bevorzugten Bedienhandlungstyp Informationen darüber umfasst, ob ein Nutzer in der Vergangenheit Bedienhandlungen des bevorzugten Bedienhandlungstyps verwendet hat, um bestimmte Eingaben vorzunehmen, und wie er diese Bedienhandlungen ausgeführt hat; und
anhand der Bedienhistorie eine Ausgabe erzeugt und ausgegeben wird, wobei
die Ausgabe einen Hinweis auf die Ausführung des bevorzugten Bedienhandlungstyps umfasst,
wobei ferner Bedienhandlungen des Nutzers als Eingabe erfasst und Bedienhandlungstypen zugeordnet werden und anhand der erfassten Bedienhandlungen die Bedienhistorie aktualisiert wird,
**dadurch gekennzeichnet, dass**
der bevorzugte Bedienhandlungstyp anhand der Position eines Fahrzeugsitzes, auf dem sich der Nutzer befindet, bestimmt wird und
die Ausgabe eine schematische grafische Darstellung einer Hand (21) umfasst, wobei der Hinweis auf die Ausführung des bevorzugten Bedienhandlungstyps mittels der Darstellung der Hand (21) ausgegeben wird, wobei
der bevorzugte Bedienhandlungstyp eine Geste im dreidimensionalen Raum oder auf einer berührungsempfindlichen Oberfläche umfasst, wobei,
falls anhand der erfassten Bedienhistorie bestimmt wird, dass der Nutzer den bevorzugten Bedienhandlungstyp selten oder niemals verwendet hat, die Darstellung der Hand (21) die Ausführung dieses Gestentyps darstellt, oder falls anhand der erfassten Bedienhistorie bestimmt wird, dass der Nutzer die Bedienhandlung des bevorzugten Bedienhandlungstyps nicht optimal ausgeführt hat, die Geste des Bedienhandlungstyps erkannt wird und eine schematische Hand (21) angezeigt wird, welche die korrekte oder sparsamere Gestenausführung in Bewegung anzeigt.

2. Verfahren gemäß Anspruch 1,
**dadurch gekennzeichnet, dass**
zumindest zwei potentielle Bedienhandlungstypen für die bedienbare Funktion bestimmt werden; und
einer der potentiellen Bedienhandlungstypen als bevorzugter Bedienhandlungstyp bestimmt wird.

3. Verfahren gemäß einem der vorhergehenden Ansprüche,
**dadurch gekennzeichnet, dass**
die Bedienhistorie für den bevorzugten Bedienhandlungstyp Informationen über eine Benutzungshäufigkeit und/oder eine Ausführungsqualität des bevorzugten Bedienhandlungstyps umfasst.

4. Verfahren gemäß einem der vorhergehenden Ansprüche,
**dadurch gekennzeichnet, dass**
eine Nutzeridentifikation des Nutzers erfasst wird; und
die Bedienhistorie für den bevorzugten Bedienhandlungstyp für den identifizierten Nutzer erfasst wird.

5. Verfahren gemäß einem der vorhergehenden Ansprüche,
**dadurch gekennzeichnet, dass**
eine Bedienhandlung erfasst wird, die keinem potentiellen Bedienhandlungstyp zuordenbar ist;
anhand der bedienbaren Funktion und der erfassten Bedienhandlung eine Intentionshypothese bestimmt wird; und
die Ausgabe mit dem Hinweis anhand der Intentionshypothese erzeugt wird.

6. Verfahren gemäß einem der vorhergehenden Ansprüche,
**dadurch gekennzeichnet, dass**
anschließend an die Ausgabe mit dem Hinweis eine Bedienhandlung des bevorzugten Bedienhandlungstyps erfasst wird; und
anhand der erfassten Bedienhandlung ein Lernvorgang zum Erkennen des bevorzugten Bedienhandlungstyps ausgeführt wird.

7. Verfahren gemäß einem der vorhergehenden Ansprüche,
**dadurch gekennzeichnet, dass**
eine Auswahl-Bedienhandlung erfasst wird;
anhand der erfassten Auswahl-Bedienhandlung eine bedienbare Einrichtung bestimmt wird; und
die bedienbare Funktion anhand der bestimmten bedienbaren Einrichtung bestimmt wird.

8. Bediensystem, umfassend
eine Steuereinheit (8); sowie
eine Anzeigeeinheit (3), die mit der Steuereinheit (8) gekoppelt ist; wobei
die Steuereinheit (8) dazu eingerichtet ist, eine bedienbare Funktion des Bediensystems zu erfassen; in Abhängigkeit von der bedienbaren Funktion zumindest einen potentiellen Bedienhandlungstyp für die bedienbare Funktion zu bestimmen, wobei einer der potentiellen Bedienhandlungstypen als bevorzugter Bedienhandlungstyp bestimmt wird; und eine Bedienhistorie für den bevorzugten Bedienhandlungstyp der bedienbaren Funktion zu erfassen, wobei die Bedienhistorie für den bevorzugten Bedienhandlungstyp Informationen darüber umfasst, ob ein Nutzer in der Vergangenheit Bedienhandlungen des bevorzugten Bedienhandlungstyps verwendet hat, um bestimmte Eingaben vorzunehmen, und wie er diese Bedienhandlungen ausgeführt hat; wobei die Steuereinheit (8) ferner dazu eingerichtet ist, die Anzeigeeinheit (3) so anzusteuern, dass anhand der Bedienhistorie eine Ausgabe erzeugt und ausgegeben wird, die einen Hinweis auf die Ausführung des potentiellen Bedienhandlungstyps umfasst, wobei ferner Bedienhandlungen des Nutzers als Eingabe erfasst und Bedienhandlungstypen zugeordnet werden und anhand der erfassten Bedienhandlungen die Bedienhistorie aktualisiert wird,
**dadurch gekennzeichnet, dass**
die Steuereinheit (8) ferner dazu eingerichtet ist, dass der bevorzugte Bedienhandlungstyp anhand der Position eines Fahrzeugsitzes, auf dem sich der Nutzer befindet, bestimmt wird,
die Ausgabe eine schematische grafische Darstellung einer Hand (21) umfasst, wobei der Hinweis auf die Ausführung des bevorzugten Bedienhandlungstyps mittels der Darstellung der Hand (21) ausgegeben wird, wobei
der bevorzugte Bedienhandlungstyp eine Geste im dreidimensionalen Raum oder auf einer berührungsempfindlichen Oberfläche umfasst, wobei,
falls anhand der erfassten Bedienhistorie bestimmt wird, dass der Nutzer den bevorzugten Bedienhandlungstyp selten oder niemals verwendet hat, die Darstellung der Hand (21) die Ausführung dieses Gestentyps darstellt, oder falls anhand der erfassten Bedienhistorie bestimmt wird, dass der Nutzer die Bedienhandlung des bevorzugten Bedienhandlungstyps nicht optimal ausgeführt hat, die Geste des Bedienhandlungstyps erkannt wird und eine schematische Hand (21) angezeigt wird, welche die korrekte oder sparsamere Gestenausführung in Bewegung anzeigt.

9. Bediensystem gemäß Anspruch 8,
**gekennzeichnet durch**
eine Identifikationsvorrichtung, die dazu eingerichtet ist, eine Nutzeridentifikation des Nutzers zu erfassen, wobei
die Steuereinheit (8) ferner dazu eingerichtet ist, die Bedienhistorie für den bevorzugten Bedienhandlungstyp für den identifizierten Nutzer zu erfassen.

10. Bediensystem gemäß Anspruch 8 oder 9,
**gekennzeichnet durch**
eine Erfassungseinheit zum Erfassen der Bedienhandlung, insbesondere mit einer Kamera (5) zum Erfassen einer Geste in einem Erfassungsbereich (7) und/oder einer berührungsempfindlichen Oberfläche (4) und insbesondere zusätzlich mit einer Spracherfassungseinheit.

11. Bediensystem gemäß Anspruch 11,
**dadurch gekennzeichnet, dass**
die Steuereinheit (8) dazu eingerichtet ist, anhand der erfassten Bedienhandlung einen Lernvorgang zum Erkennen des potentiellen Bedienhandlungstyps auszuführen.

12. Fahrzeug (1) mit einem Bediensystem gemäß einem der Ansprüche 8 bis 11.

## Claims

1. Method for operating an operating system, in which
an operable function of the operating system is detected;
at least one potential operating action type is determined for the operable function depending on the operable function, wherein one of the potential operating action types is determined as a preferred operating action type;
an operating history is acquired for the preferred operating action type of the operable function, wherein the operating history for the preferred operating action type includes information about whether a user has in the past used operating actions of the preferred operating action type to make certain inputs, and about how the user executed these operating actions; and
an output is generated and output on the basis of the operating history, wherein
the output includes a suggestion for the execution of the preferred operating action type,
wherein the operating actions of the user are further detected as an input and assigned to the operating action types, and the operating history is updated on the basis of the detected operating actions,
**characterized in that**
the preferred operating action type is determined on the basis of the position of a vehicle seat on which the user is located and
the output comprises a schematic graphic representation of a hand (21), wherein the suggestion for the execution of the preferred operating action type is output by means of the representation of the hand (21), wherein
the preferred operating action type comprises a gesture in three-dimensional space or on a touch-sensitive surface, wherein,
if it is determined, on the basis of the acquired operating history, that the user has rarely or never used the preferred operating action type, the representation of the hand (21) represents the execution of this gesture type, or if it is determined, on the basis of the acquired operating history, that the user has not optimally executed the operating action of the preferred operating action type, the gesture of the operating action type is recognized and a schematic hand (21) that shows the correct or more economical execution of the gesture in motion is displayed.

2. Method according to claim 1,
**characterized in that**
at least two potential operating action types for the operable function are determined; and
one of the potential operating action types is determined as the preferred operating action type.

3. Method according to either of the preceding claims,
**characterized in that**
the operating history for the preferred operating action type includes information about a frequency of use and/or a quality of execution of the preferred operating action type.

4. Method according to any of the preceding claims,
**characterized in that**
a user identification of the user is detected; and
the operating history for the preferred operating action type is acquired for the identified user.

5. Method according to any of the preceding claims,
**characterized in that**
an operating action is detected which cannot be assigned to any potential operating action type;
an intention hypothesis is determined on the basis of the operable function and the detected operating action; and
the output with the suggestion is generated on the basis of the intention hypothesis.

6. Method according to any of the preceding claims,
**characterized in that**
following the output with the suggestion, an operating action of the preferred operating action type is detected; and
a learning process to recognize the preferred operating action type is executed on the basis of the detected operating action.

7. Method according to any of the preceding claims,
**characterized in that**
a selection operating action is detected;
an operable device is determined on the basis of the detected selection operating action; and
the operable function is determined on the basis of the determined operable device.

8. Operating system comprising
a control unit (8); and
a display unit (3) coupled to the control unit (8); wherein
the control unit (8) is designed to detect an operable function of the operating system; to determine at least one potential operating action type for the operable function depending on the operable function, wherein one of the potential operating action types is determined as the preferred operating action type; and to acquire an operating history for the preferred operating action type of the operable function, wherein the operating history for the preferred operating action type includes information about whether a user has in the past used operating actions of the preferred operating action type to make certain inputs, and about how the user executed these operating actions; wherein the control unit (8) is further designed to control the display unit (3) in such a way that an output is generated and output on the basis of the operating history, which output comprises a suggestion for the execution of the potential operating action type, wherein the operating actions of the user are further detected as an input and assigned to the operating action types, and the operating history is updated on the basis of the detected operating actions,
**characterized in that**
the control unit (8) is further designed such that the preferred operating action type is determined on the basis of the position of a vehicle seat on which the user is located,
the output comprises a schematic graphic representation of a hand (21), wherein the suggestion for the execution of the preferred operating action type is output by means of the representation of the hand (21), wherein
the preferred operating action type comprises a gesture in three-dimensional space or on a touch-sensitive surface, wherein,
if it is determined, on the basis of the acquired operating history, that the user has rarely or never used the preferred operating action type, the representation of the hand (21) represents the execution of this gesture type, or if it is determined, on the basis of the acquired operating history, that the user has not optimally executed the operating action of the preferred operating action type, the gesture of the operating action type is recognized and a schematic hand (21) that shows the correct or more economical execution of the gesture in motion is displayed.

9. Operating system according to claim 8,
**characterized by**
an identification apparatus designed to detect a user identification of the user; wherein
the control unit (8) is further designed to acquire the operating history for the preferred operating action type for the identified user.

10. Operating system according to claim 8 or claim 9,
**characterized by**
a detection unit for detecting the operating action, in particular having a camera (5) for detecting a gesture in a detection region (7) and/or having a touch-sensitive surface (4) and in particular additionally having a speech detection unit.

11. Operating system according to claim 11,
**characterized in that**
the control unit (8) is designed to execute a learning process to recognize the potential operating action type on the basis of the detected operating action.

12. Vehicle (1) having an operating system according to any of claims 8 to 11.

## Revendications

1. Procédé permettant de faire fonctionner un système de commande, dans lequel
une fonction pouvant être commandée du système de commande est détectée ;
en fonction de la fonction pouvant être commandée, au moins un type d'action de commande potentiel est déterminé pour la fonction pouvant être commandée, dans lequel l'un des types d'action de commande potentiels est déterminé comme type d'action de commande préféré ;
un historique de commande pour le type d'action de commande préféré de la fonction pouvant être commandée est détecté, dans lequel l'historique de commande pour le type d'action de commande préféré comprend des informations établissant si un utilisateur a utilisé ou non dans le passé des actions de commande du type d'action de commande préféré pour effectuer des entrées déterminées, et établissant la manière dont il a exécuté ces actions de commande ; et
à l'aide de l'historique de commande, une sortie est générée et délivrée en sortie, dans lequel
la sortie comprend une indication de l'exécution du type d'action de commande préféré,
dans lequel, en outre, des actions de commande de l'utilisateur sont détectées comme entrée et attribuées à des types d'actions de commande et l'historique de commande est actualisé à l'aide des actions de commande détectées,
**caractérisé en ce que**
le type d'action de commande préféré est déterminé à l'aide de la position d'un siège de véhicule sur lequel se trouve l'utilisateur, et
la sortie comprend une représentation graphique schématique d'une main (21), dans lequel l'indication de l'exécution du type d'action de commande préféré est délivrée en sortie par le biais de la représentation de la main (21), dans lequel
le type d'action de commande préféré comprend un geste dans l'espace tridimensionnel ou sur une surface sensible au toucher, dans lequel,
s'il est déterminé, à l'aide de l'historique de commande détecté, que l'utilisateur a rarement ou n'a jamais utilisé le type d'action de commande préféré, la représentation de la main (21) représente l'exécution de ce type de geste, ou s'il est déterminé, à l'aide de l'historique de commande détecté, que l'utilisateur n'a pas exécuté de manière optimale l'action de commande du type d'action de commande préféré, le geste du type d'action de commande est reconnu et une main (21) schématique est affichée, laquelle indique l'exécution correcte ou plus économique du geste en mouvement.

2. Procédé selon la revendication 1,
**caractérisé en ce que**
au moins deux types d'action de commande potentiels sont déterminés pour la fonction pouvant être commandée ; et
l'un des types d'action de commande potentiels est déterminé comme type d'action de commande préféré.

3. Procédé selon l'une des revendications précédentes,
**caractérisé en ce que**
l'historique de commande pour le type d'action de commande préféré comprend des informations sur une fréquence d'utilisation et/ou une qualité d'exécution du type d'action de commande préféré.

4. Procédé selon l'une des revendications précédentes,
**caractérisé en ce que**
une identification d'utilisateur de l'utilisateur est détectée ; et
l'historique de commande pour le type d'action de commande préféré est détecté pour l'utilisateur identifié.

5. Procédé selon l'une des revendications précédentes,
**caractérisé en ce que**
une action de commande est détectée, laquelle ne peut être attribuée à aucun type d'action de commande potentiel ;
une hypothèse d'intention est déterminée à l'aide de la fonction pouvant être commandée et de l'action de commande détectée ; et
la sortie est générée avec l'indication à l'aide de l'hypothèse d'intention.

6. Procédé selon l'une des revendications précédentes,
**caractérisé en ce que**
une action de commande du type d'action de commande préféré est détectée à la suite de la sortie avec l'indication ; et
à l'aide de l'action de commande détectée, un processus d'apprentissage est exécuté pour la reconnaissance du type d'action de commande préféré.

7. Procédé selon l'une des revendications précédentes,
**caractérisé en ce que**
une action de commande de sélection est détectée ;
un appareil pouvant être commandé est déterminé à l'aide de l'action de commande de sélection détectée ; et
la fonction pouvant être commandée est déterminée à l'aide de l'appareil pouvant être commandé déterminé.

8. Système de commande, comprenant
une unité de régulation (8) ; ainsi que
une unité d'affichage (3) qui est couplée à l'unité de régulation (8) ; dans lequel
l'unité de régulation (8) est configurée pour détecter une fonction pouvant être commandée du système de commande ; pour déterminer, en fonction de la fonction pouvant être commandée, au moins un type d'action de commande potentiel pour la fonction pouvant être commandée, dans lequel l'un des types d'action de commande potentiels est déterminé comme type d'action de commande préféré ; et pour détecter un historique de commande pour le type d'action de commande préféré de la fonction pouvant être commandée, dans lequel l'historique de commande pour le type d'action de commande préféré comprend des informations établissant si un utilisateur a utilisé dans le passé des actions de commande du type d'action de commande préféré pour effectuer des entrées déterminées, et établissant la manière dont il a exécuté ces actions de commande ; dans lequel l'unité de régulation (8) est en outre configurée pour réguler l'unité d'affichage (3) de telle sorte qu'à l'aide de l'historique de commande, une sortie est générée et délivrée en sortie, laquelle comprend une indication de l'exécution du type d'action de commande potentiel, dans lequel des actions de commande de l'utilisateur sont en outre détectées comme entrée et associées à des types d'action de commande et l'historique de commande est actualisé à l'aide des actions de commande détectées,
**caractérisé en ce que**
l'unité de régulation (8) est en outre configurée de sorte que le type d'action de commande préféré est déterminé à l'aide de la position d'un siège de véhicule sur lequel se trouve l'utilisateur,
la sortie comprend une représentation graphique schématique d'une main (21), dans lequel l'indication de l'exécution du type d'action de commande préféré est délivrée en sortie par le biais de la représentation de la main (21), dans lequel
le type d'action de commande préféré comprend un geste dans l'espace tridimensionnel ou sur une surface sensible au toucher, dans lequel,
s'il est déterminé, à l'aide de l'historique de commande détecté, que l'utilisateur a rarement ou n'a jamais utilisé le type d'action de commande préféré, la représentation de la main (21) représente l'exécution de ce type de geste, ou s'il est déterminé, à l'aide de l'historique de commande détecté, que l'utilisateur n'a pas exécuté de manière optimale l'action de commande du type d'action de commande préféré, le geste du type d'action de commande est reconnu et une main (21) schématique est affichée, laquelle indique l'exécution correcte ou plus économique du geste en mouvement.

9. Système de commande selon la revendication 8,
**caractérisé par**
un dispositif d'identification qui est configuré pour détecter une identification d'utilisateur de l'utilisateur ; dans lequel
l'unité de régulation (8) est en outre configurée pour détecter l'historique de commande pour le type d'action de commande préféré pour l'utilisateur identifié.

10. Système de commande selon la revendication 8 ou 9,
**caractérisé par**
une unité de détection pour la détection de l'action de commande, en particulier avec une caméra (5) pour la détection d'un geste dans une zone de détection (7) et/ou une surface sensible au toucher (4) et en particulier en outre avec une unité de détection de la parole.

11. Système de commande selon la revendication 11,
**caractérisé en ce que**
l'unité de régulation (8) est configurée pour exécuter, à l'aide de l'action de commande détectée, un processus d'apprentissage pour la reconnaissance du type d'action de commande potentiel.

12. Véhicule (1) comportant un système de commande selon l'une des revendications 8 à 11.
